Europäisches Patentamt

European Patent Office

Office européen des brevets

(11) Publication number: **0 111 330**
**B1**

(12) **EUROPEAN PATENT SPECIFICATION**

(45) Date of publication of patent specification: **02.09.87**

(21) Application number: **83112413.6**

(22) Date of filing: **09.12.83**

(51) Int. Cl.⁴: **F 03 B 3/18**

(54) **Guide vane operating mechanism for water turbines.**

(30) Priority: **10.12.82 JP 215562/82**

(43) Date of publication of application:
**20.06.84 Bulletin 84/25**

(45) Publication of the grant of the patent:
**02.09.87 Bulletin 87/36**

(84) Designated Contracting States:
**CH DE LI**

(56) References cited:
**CH-A- 207 772**
**GB-A- 927 623**

(73) Proprietor: **HITACHI, LTD.**
**6, Kanda Surugadai 4-chome Chiyoda-ku**
**Tokyo 100 (JP)**

(72) Inventor: **Shinohara, Morimiti**
**6-7, Namekawacho-3-chome**
**Hitachi-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

EP 0 111 330 B1

Courier Press, Leamington Spa, England.

## Description

The present invention relates to a guide vane operating mechanism for water turbines according to the first portion of Claim 1.

In a hydraulic machine such as, for example, a Francis turbine installed in a hydraulic power station, a plurality of guide vanes are arranged along the inner periphery of the volute casing of the turbine. These guide vanes are adapted to change the angle at which the water is directed to the runner (referred to as "angle of attack", hereinunder) of the turbine thereby to control the speed of the latter. The change in the angle of attack is effected by rotating the guide vanes around their axes by means of a guide vane operating mechanism.

The guide vane operating mechanism has a guide ring of an outside diameter smaller than the inside diameter of the volute casing, a plurality of linking mechanisms through which the guide vanes are connected to the guide ring, and a servomotor for rotatingly driving the guide ring.

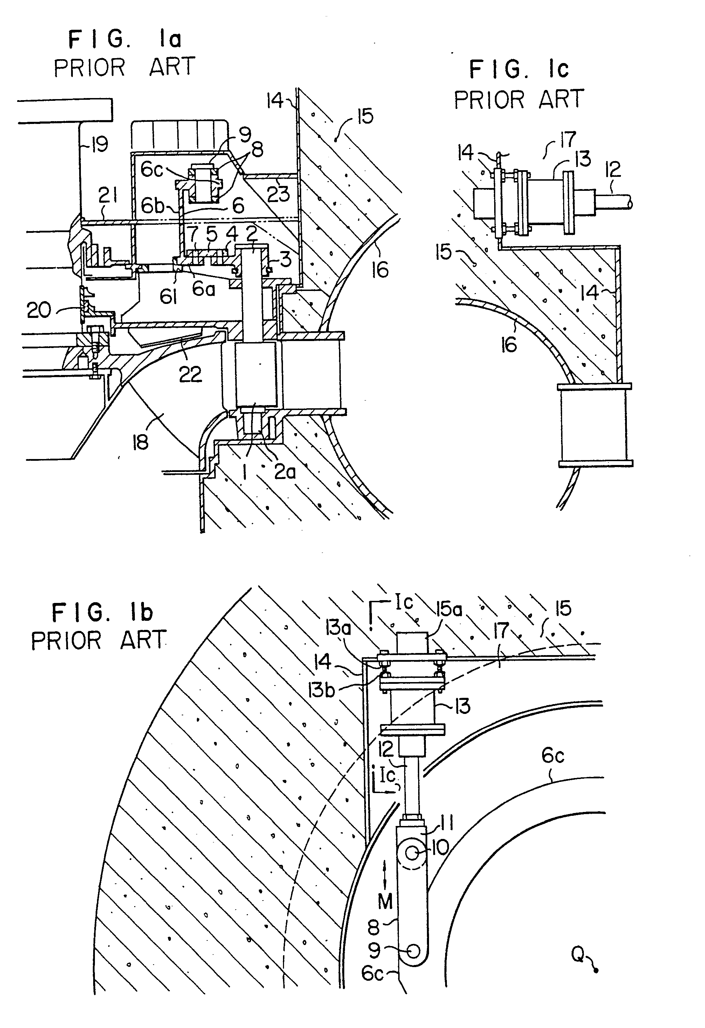

A typical conventional guide vane operating mechanism will be described hereinunder with specific reference to Figure 1a which is a sectional view of an upper part of a Francis turbine for use in a hydraulic power generating plant, while Figure 1b is a schematic top plan view of a guide vane operating mechanism incorporated in this water turbine.

As will be seen from these Figures, the Francis turbine has a runner 18 integral with a main shaft 19 and adapted to be rotated by the energy of the water which is introduced from the volute casing 16 through the guide vanes 1. A reference numeral 20 designates a water seal packing for the main shaft 19, 21 denotes a metal case, 22 denotes an upper cover, and 23 denotes the floor of an access passage which is fixed to a pit liner 14 so as to cover a guide ring 6 which will be mentioned later.

Each guide vane 1 is mounted by an upper and lower shafts 2 and 2a for rotation around the common axis of these shafts. A lever 3 is fixed to the upper shaft 2 constituting an operation shaft 2 for the guide vane 1. The lever 3 is pivotally connected at its end to one end of a link 5 through a pin 4. The other end of the link 5 is pivotally connected through a pin 7 to the lower annular flange 6a of the guide ring 6 surrounding the main shaft 19.

In operation, as the guide ring 6 is rotated around the main shaft 19, the guide vanes 1 are rotated around the axes of the shafts 2, 2a through the action of the levers 3 and the links 5. Thus, the orientation of the guide vanes 1, i.e. the angle of attack at which the water comes into collision with the blades of the runner 18, is determined in accordance with the rotational position of the guide ring 6. The guide ring 6 is adapted to slide along a guide rail 61.

Figure 1b schematically shows the servomotor device incorporated in the guide vane operating mechanism. This servomotor device has a link 8 having a forked end which is pivotally connected through a pin 9 to an upper annular flange 6c of the guide ring 6 in such a manner that the flange 6c is sandwiched between both fingers of the forked end. The other end of the link 8 which is also forked is pivotally connected through a pin 10 to a fitting 11 fitted onto the end of the piston rod 12 of a servomotor 13. The servomotor 13 is fixed at its rear end by bolts 13a and nuts 13b to a fixing member 15a laid on the concrete wall 15 along the pit liner 14.

In operation, as the servomotor 13 is actuated to extend or retract the piston rod 12, the guide ring 6 is rotated through the action of the fitting 11, pin 10, link 8 and the pin 9, thereby to cause the rotation of the guide vanes 1 as explained already.

In order that the servomotor 13 can operate safely, it is essential to avoid, when the piston rod 12 is moved in the direction of the arrow, any interference between the outer extremity of the fitting 11 shown by the broken line and the upper flange 6c of the guide ring 6. To this end, it is necessary to preserve a large distance between the pins 9 and 10 on the link 8, which causes the link 8 to have a large length. This requires to shift the position of the installation of the servomotor 13 backwardly. Unfortunately, however, it is not allowed to shift the servomotor 13 unlimitedly because of the interference of the servomotor with the turbine casing 16. In order to avoid the interference between the servomotor 13 and the turbine casing 16, it is necessary to mount the servomotor at an elevated position above the upper surface of the casing 16 as shown in Figure 1c, which in turn requires the guide ring 6 to have a correspondingly elevated height. For this reason, in the conventional guide vane operating mechanism, the length of the link 8 is inevitably increased so as to incur various problems such as an increase in the pit space 17 in which the servomotor 13 is situated, increase in the height and size of the guide ring 6, and so forth.

This problem would be overcome if the link 8 is omitted, i.e. if the fitting 11 is directly connected to the guide ring 6 by means of the pin 9. Such an arrangement, however, incurs another problem that the piston rod 12 becomes inoperative due to a twisting force applied thereto because the pins 9 are moved along arcuate paths but not linear paths as the guide ring 6 rotates, unless a complicated construction such as a rockable mount for the servomotor 13 is adopted.

The increased height of the guide ring 6 imposes another problem that, since the guide ring 6 having such a large height conceals the main shaft 19, it becomes quite difficult to effect the maintenance work around the main shaft 19 such as renewal of the water seal packing 20 on the main shaft 19.

GB—A—927 623 discloses an adjusting device for the guide blading of water turbines having a main shaft carrying a runner and guide vanes for varying the angle of attack of water to said runner. A guide ring is rotatably arranged around said main shaft and connected to said guide vanes in such a manner that a rotation of said guide ring changes the angle of attack of water to said vanes. By use of said guide vane driving mechanism said guide vanes are drivably between fully-open and fully-closed positions. The device further comprises a servomotor having a reciprocatingly actuating rod, the outer end thereof being rotatably connected with a connecting rod. The other end of said connecting rod being in a turnable connection with said above mentioned guide ring. Therefore an actuation of the servomotor, which is in the form of a cylinder and piston device causes the actuating rod to move in a longitudinal direction. Since the guide ring is rotatably around the main shaft of the device, the outer end of the connecting rod is moved along a circular path while the other end facing the actuating rod is moved in a longitudinal direction in compliance with the movement of the actuating rod.

It is the object of the present invention to provide a guide vane operating mechanism of reduced dimensions and decreased height of the guide ring.

This object will be solved by the characterizing features of the second portion of Claim 1.

In the guide vane operating mechanism of the invention, since the end of the actuating rod of the servomotor is connected to the guide ring through the crankshaft, it is possible to eliminate the elongated link which is indispensable in the conventional guide vane operating mechanism. Consequently, the servomotor can be mounted substantially at the same level as the guide ring without the fear of interference with the casing. Thus, the guide vane operating mechanism can be mounted in a compact manner within the inner periphery of the casing. In addition, the guide ring does not impede the maintenance work around the main shaft because it can be devoid of the high peripheral wall.

The invention will be fully described hereinunder through its preferred form with reference to the accompanying drawings in which:

Figure 1a is a sectional view of a conventional guide vane operating mechanism provided in an upper portion of a water turbine;

Figure 1b is a top plan view of the guide vane operating mechanism shown in Figure 1a;

Figure 1c is a side elevational view of a servomotor device incorporated in the guide vane operating mechanism shown in Figure 1c;

Figure 2a is a sectional view of a guide vane operating mechanism in accordance with an embodiment of the invention provided on an upper portion of a water turbine;

Figure 2b is a top plan view of the guide vane operating mechanism shown in Figure 2a;

Figure 2c is a side elevational view of a servomotor device incorporated in the guide vane operating mechanism shown in Figure 2a;

Figure 3 is a perspective view of an example of a crankshaft incorporated in the embodiment shown in Figures 2a to 2c;

Figure 4 is an enlarged vertical sectional view of the guide vane operating mechanism shown in Figure 2a;

Figure 5 is a top plan view of a fitting connection adopted in the mechanism shown in Figure 4;

Figure 6 is an illustration of path of movement of the crankshaft incorporated in the guide vane operating mechanism of the invention; and

Figure 7 is an enlarged and analytical illustration of the path of movement of the crankshaft as shown in Figure 6.

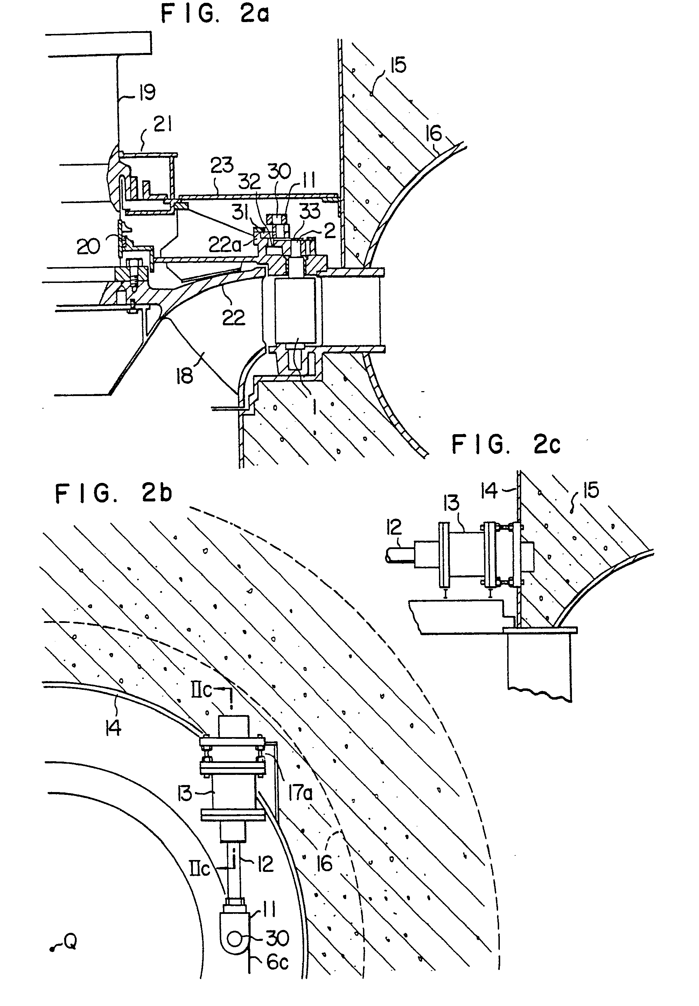

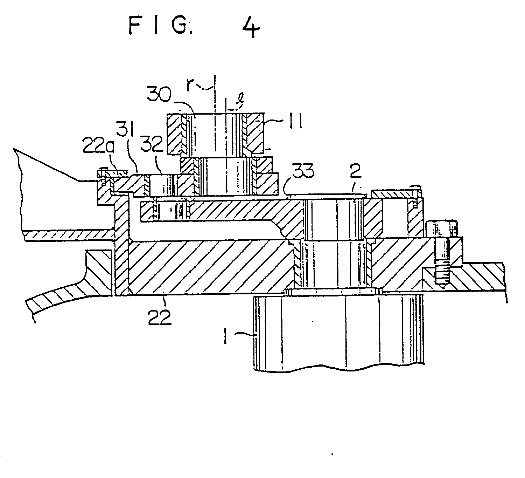

A preferred embodiment of the invention will be described hereinunder with reference to Figures 2a to 7, in which the parts or members common to those incorporated in the conventional mechanism shown in Figures 1a to 1c are denoted by the same reference numerals and the detailed description thereof is omitted in order to avoid duplication of explanation.

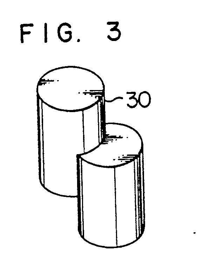

Referring to these figures, a guide vane operating mechanism of the invention has a crankshaft 30 composed of two cylindrical columns integrally connected to each other with their axes $r$ and $l$ disposed at an eccentricity from each other. One end of the crankshaft 30 is rotatably received by the fitting 11 on the piston rod 12, while the other end of the same is rotatably received by the guide ring 31. The guide ring 31 has an annular disc-link form with its inner peripheral edge guided by the step of an inner cylinder 22a of the upper cover 22. A reference numeral 32 designates an eccentric pin which is composed of a pair of cylindrical columns integral with each other with their axes disposed at an eccentricity from each other as in the case of the crankshaft 30. The eccentric pin 32 is rotatably received at its one end by a guide ring 31 while the other end of the same rotatably fits in a bore formed in one end of one of a plurality of levers 32. More specifically, the levers 33, which corresponds in number to the number of the guide vanes 1, are arranged at a constant circumferential pitch on the outer periphery of the guide ring 31, and the other ends of the levers 33 are connected to the upper operation shafts 2 of the corresponding guide vanes 1. As will be seen from Figure 3, the two cylindrical columns constituting the crankshaft 30 are connected directly to each other. The angle α (see Figure 5) formed between the line of movement of the fitting 11 and the line interconnecting the centers of the cylindrical columns of the crankshaft 30 is selected to range between 0 and 45°. The efficiency of transmission of force from the piston rod 12 to the fitting 11 is decreased as this angle α grows large. As will be seen from Figures 2b and 2c, since the link essential in the conventional arrangement is eliminated, the installation of the servomotor 13 requires only a small space 17a slightly projecting from the pit liner 14, so that the interference between the servomotor 13 and the casing 16 is avoided advantageously.

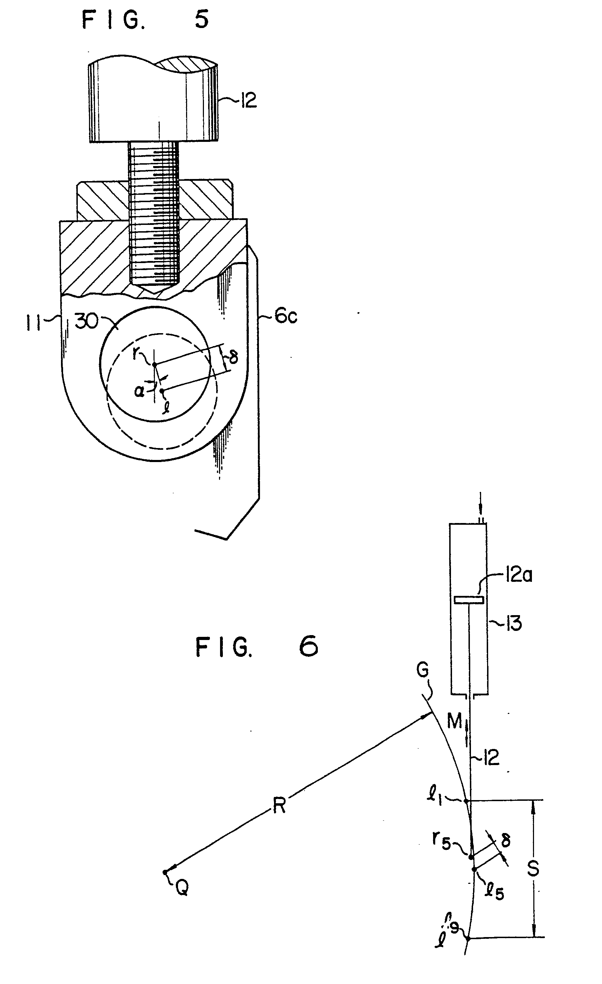

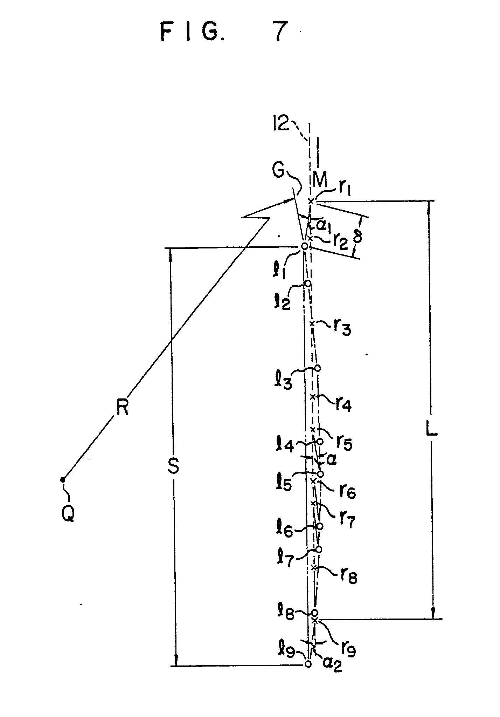

Referring now to Figures 6 and 7, a reference symbol Q represents the center of the guide ring, while R represents the radius of the arcuate path G of movement of the portion of the crankshaft 30 received by the guide ring 31 as measured from the center Q of the guide ring 31. An arc $l_1$—$l_9$ is the locus of movement of the axis $l$ of the portion of the crankshaft 30 received by the guide ring 31 during the operation of the guide vanes between the full-open position and the full-close position. A symbol S represents the distance travelled by this portion of the crankshaft 30 when the same is moved from the point $l_1$ to the point $l_9$. A line $r_1$—$r_9$ is the linear locus drawn by the axis $r$ of the portion of the crankshaft 30 received by the fitting 11. A symbol L represents the distance travelled by this portion of the crankshaft 30 when the same is moved from the point $r_1$ to the point $r_9$. The distances S and L, which are the same to each other, are equal to the distance of movement of the piston rod 12, i.e. the distance of movement of the fitting 11. The points $r_5$ and $l_5$ correspond to the half opening of the guide vanes 1. A symbol $\delta$ represents the distance or eccentricity between the axes of two cylindrical columns of the crankshaft 30.

Assuming that the guide vanes 1 are to be operated from the full-open position to the full-close position, the operation of the guide vane operating mechanism is as follows. Suppose here that the positions $r_1$ and $l_1$ of respective portions of the crankshaft 30 correspond to the full-open position of the guide vanes. As the piston rod 12 is activated, the guide ring 31 is rotated around the center Q thereof along the locus G of the radius R. Consequently, the axes $r$ and $l$ of respective portions of the crankshaft 30 are started from the positions $r_1$, $l_1$ and are moved past the positions $r_2$, $l_2$; $r_3$, $l_3$ and $r_4$, $l_4$ to reach the positions $r_5$, $l_5$ corresponding to the half opening of the guide vanes. Then, as the piston rod 12 is further activated, the axes of the crankshaft 30 are moved past the positions $r_6$, $l_6$; $r_7$, $l_7$ and $r_8$, $l_8$ to reach the positions $r_9$, $l_9$ corresponding to the full-closing of the guide vanes.

As will be seen from Figure 6, the axis of the position of the crankshaft represented by $r$ makes a linear movement despite the rotation of the crankshaft 30. On the other hand, the portion of the crankshaft represented by $l$ moves along the arcuate path G. More specifically, the points $l_1$, $l_2$ and $l_9$ are located at the left side of the axis $r$ of the crankshaft 30 making a linear movement, while the points $l_3$ to $l_7$ are located at the right side of the same, thereby to smooth the linear motion of the piston rod 12.

For operating the guide vanes to the full open position, the piston rod 12 is reversed so that the axes $r$ and $l$ of the crankshaft 30 are moved from the positions $r_9$, $l_9$ to the positions $r_1$, $l_1$, respectively.

According to the invention, it is possible to eliminate the link which is used for actuating the guide ring in the conventional guide vane operating mechanism. Consequently, the area of the pit portion for the installation of the servomotor is decreased and the dimensions of the guide ring can be decreased remarkably, so that the dimensions of the guide vane operating mechanism can be reduced advantageously.

## Claims

1. A guide vane operating mechanism in a water turbine having a runner secured on the turbine shaft, a volute casing embedded in a concrete structure and surrounding the turbine shaft and adjustable guide vanes for varying the angle of attack of water to the runner, the operating mechanism comprising:

a guide ring (31) rotatably arranged around the turbine shaft (19) and connected to the shafts (2) of the guide vanes (1) by levers (33) to rotate the guide vanes (1) between full-open and full-closed positions and

at least one servo motor (13) secured at its rear end on the inner wall of the concrete structure and having a reciprocating actuating rod (12) tangentially disposed to the guide ring (31) for rotating the guide ring (31),

characterized in that the actuating rod (12) of the servo motor (13) is connected to the guide ring (31) by a crankshaft (30) which is formed of two columnar bodies integrally incorporated together in a staggered manner and

that the guide ring (31) is an annular disc ring guided with its inner peripheral edge by a step of an inner cylinder (22a) of the volute casing.

2. A guide vane operating mechanism according to Claim 1, characterized in that the guide ring (31) is connected to the levers (33) of the guide vanes (1) by eccentric pins (32).

## Patentansprüche

1. Leitschaufel-Verstellvorrichtung für eine Wasserturbine, auf deren Turbinenwelle ein Leitrad befestigt ist und die ein in eine Betonkonstruktion eingebettetes Spiralgehäuse sowie verstellbare Leitschaufeln zum Verstellen des Angriffswinkels des Wassers am Laufrad aufweist, wobei die Verstellvorrichtung umfaßt:

einen Regulierring (31), der um die Turbinenwelle (19) drehbar angeordnet und mit den Zapfen (2) der Leitschaufeln (1) über Hebel (33) verbunden ist zum Verdrehen der Leitschaufeln (1) zwischen vollständigen Offen- und vollständigen Schießstellungen, und

wenigstens einen Servomotor (13), der mit seinem Hinterende an der Innenwand der Betonkonstruktion befestigt ist und eine hin- und hergehende Betätigungsstange (12) aufweist, die zum Regulierring (31) tangential angeordnet ist und diesen verdreht,

dadurch gekennzeichnet,

daß die Betätigungsstange (12) des Servomotors (13) mit dem Regulierring (31) über eine Kurbelwelle (30) verbunden ist, die aus zwei Säulenkörpern besteht, die gegeneinander versetzt einstückig zusammengefügt sind, und daß der Regulierring (31) eine ringförmige Ringscheibe ist, die an ihrem Innenumfangsrand von einer Stufe eines Innenzylinders (22a) des Spiralgehäuses geführt ist.

2. Leitschaufel-Verstellvorrichtung nach Anspruch 1, dadurch gekennzeichnet, daß der Regulierring (31) über Exzenterstifte (32) mit den Hebeln (33) der Leitschaufeln (1) verbunden ist.

**Revendications**

1. Mécanisme de commande des aubes de distributeur d'une turbine à eau sur l'arbre de laquelle est fixée une roue distributrice avec une bâche spirale logée dans une construction en béton ainsi que des aubes de distributeur réglables pour le réglage de l'angle d'attaque de l'eau sur la roue distributrice, le mécanisme de commande comprenant:

un anneau de réglage (31) qui est disposé de facon rotative autour de l'arbre de la turbine (19), l'anneau étant relié avec les tenons (2) des aubes de distributeur (1) par l'intermédiaire des leviers (33) pour tourner les aubes de distributeur entre une position complètement ouverte et complètement fermée, et

au moins un servomoteur (13) qui est fixé avec son bout arrière sur la paroi intérieure de la construction en béton et qui comprend une tige d'actionnement (12) en va-et-viens, disposée tangentialement par rapport à l'anneau de réglage (31) et tournant ce dernier, caractérisé en ce que

la tige d'actionnement (12) du servomoteur (13) est relié avec l'anneau de réglage (31) par l'intermédiaire d'un arbre-manivelle (30) comprenant deux corps en forme de colonnes étant composés d'une manière desaxée et d'une seule pièce et en ce que l'anneau de réglage (31) est un disque annulaire guidé au bord de son pourtour intérieur par un épaulement d'un cylindre intérieur (22a) de la bâche spirale.

2. Mécanisme de commande des aubes de distributeur d'une turbine selon la revendication 1, caractérisé en ce que l'anneau de réglage (31) est relié avec les leviers (33) des aubes de distributeur (1) par l'intermédiaire des goupilles excentriques (32).

0 111 330

FIG. 1a
PRIOR ART

FIG. 1c
PRIOR ART

FIG. 1b
PRIOR ART

FIG. 2a

FIG. 2c

FIG. 2b

FIG. 3

# F I G. 4

F I G. 5

F I G. 6

F I G. 7